**Europäisches Patentamt**

**European Patent Office**

**Office européen des brevets**

(19)

(11) Veröffentlichungsnummer: **0 062 160**
**A1**

(12) **EUROPÄISCHE PATENTANMELDUNG**

(21) Anmeldenummer: **82101619.3**

(22) Anmeldetag: **03.03.82**

(51) Int. Cl.³: **G 01 N 21/25**

(30) Priorität: **28.03.81 DE 3112342**

(43) Veröffentlichungstag der Anmeldung: **13.10.82**
**Patentblatt 82/41**

(84) Benannte Vertragsstaaten: **AT BE CH DE FR GB IT LI LU NL SE**

(71) Anmelder: **BOEHRINGER INGELHEIM DIAGNOSTIKA GMBH, Gutenbergstrasse 3 Postfach 1609, D-8046 Garching bei München (DE)**

(72) Erfinder: **Lang, Kurt M., Waldstrasse 30, D-6390 Usingen Michelbach (DE)**

(54) **Verfahren zur Durchstrahlung von in Probegefässen einlagernden Flüssigkeiten.**

(57) Die Erfindung betrifft ein Verfahren zur Durchstrahlung von in Probegefäßen einlagernden Flüssigkeiten, insbesondere Patientenseren mittels eines Senders und eines korrespondierenden Empfängers sowie eine Vorrichtung zur Durchführung des Verfahrens. Nach der Aufgabe soll eine Gruppe vorzugsweise gleichartiger Proben hintereinander bei unbewegter Gefäßlage in schneller Folge durchstrahlt und die durch den Durchgang durch die Probe veränderte Strahlung aufgenommen werden. Die Untersuchung der zu messenden Proben soll ohne Kontaktmöglichkeiten mit Resten vorhergehender Proben erfolgen.

Die Lösung sieht vor, daß senkrecht zur Verbindungslinie, zwischen Sender und Strahlungsempfänger, eine Gruppe von in Reihen während der Durchstrahlung stationär verbleibender Probegefäße eingebracht sind, und diese durch eine achsparallel um die Verbindungslinie bewegte Strahlungsführung über eine Leitscheibe und Strahlungsleitkabel durchlichtet, und die von den durchlichteten Gefäßen abgehende Strahlung durch eine zur Sendeseite korrespondierend ausgebildete Strahlungsführung aufgenommen, gemessen und registriert wird.

Die Vorrichtung zur Ausübung des Verfahrens sieht die Bildung einer Strahlungssendekurbel und korrespondierend hierzu, einer Strahlungsaufnahmekurbel vor, wobei diese jeweils durch einen kurbelförmig ausgebildeten Strahlungskanal und einer Kurbelscheibe gebildet sind, denen jeweils eine Leitscheibe zur gesteuerten Abgabe bzw. zur gesteuerten Aufnahme der Strahlung zugeordnet ist.

Bei Verwendung einer Lichtquelle sind die Strahlungskanäle der Kurbel lichtführende Fiberformstücke und die verbindenden Strahlungsleitkabel Fiberkabel.

EP 0 062 160 A1

0062160

Die Erfindung betrifft ein Verfahren zur Durchstrahlung von in Probegefäßen einlagernden Flüssigkeiten mittels eines gerichteten Senders und eines korrespondierenden Empfängers, wobei der Sender eine Lichtquelle und der Empfänger eine Fotozelle sein kann, insbesondere zur Durchlichtung von Patientenseren sowie eine Vorrichtung zur Ausübung des Verfahrens.

Durch die DE-OS 24 02 166 ist ein Verfahren dieser Art bekannt, bei dem das Probegut nach Zuführung der Reagenzien und nach Ablauf der Reaktionszeit das Reaktionsgemisch aus dem Reaktionsgefäß abgesaugt und in aussetzendem, d.h. intermittierenden Betrieb, durch die zu durchlichtende, als Meßstrecke wirksame Küvette geführt wird.

Nachteilig bei dieser Ausbildung ist entweder die Notwendigkeit der Berücksichtigung eines gewissen Verschmutzungsfaktors von der Vorprobe oder aber die Einschaltung eines Reinigungstaktes zwischen den einzelnen Untersuchungen.
Darüberhinaus ist die Abzweigung der Teilprobe aus dem in einer Kette oder Rundsilo angeordneten Probegefäß konstruktionsaufwendig.

Eine andere Art des Vorgehens wird durch die DE-OS 23 38 985 vorgeschlagen.
Hier wird jedes einzelne Probegefäß durch einen im Koordinatensystem steuerbaren Transportwagen aus entsprechenden Racks aufgenommen und in eine Meßposition verbracht. Nach erfolgter Messung werden die einzelnen Probegefäße wieder in ihre Ausgangsposition eingestellt. Der Steuerungs- und Zeitaufwand muß als erheblich betrachtet werden.

Darüberhinaus gestatten die genannten Verfahren nicht den zur Vermeidung entmischender Erscheinungen fallweise erforderlichen Ruhezustand hinreichend einzustellen, so daß der zu durchstrahlende Bereich vielfach einen in sich, über seinen Querschnitt betrachtet, uneinheitlichen Strahlungsdurchgang aufweist.

Diese Sachlage berücksichtigend ist es Aufgabe dieser Erfindung ein Verfahren nach der eingangs beschriebenen Art zu nennen, das die Messung des Strahlendurchganges durch die in Probegefäßen eingebrachte Probe, insbesondere Patientenseren, verschleppungsfrei, d.h. ohne Kontaktmöglichkeiten der zu messenden Probe mit Resten vorhergehender Proben zuläßt, und das die Untersuchung von zumindest einer Gruppe von vorzugsweise gleichartigen Proben hintereinander, bei unbewegter Gefäßlage, z.B. in feststehenden Racks, in schneller Folge bei geringstem technischen Aufwand ermöglicht.

Die erfindungsgemäße Lösung dieser Aufgabe sieht vor, daß senkrecht zu der Verbindungslinie x zwischen der als Sender wirksamen Strahlungsquelle und dem Strahlungsempfänger eine Gruppe von in Reihe und während der Durchstrahlung der genannten Gruppe stationär in ihren Einstellpositionen verbleibender Probegefäße angeordnet sind, daß diese Probegefäße durch eine achsparallel um die Verbindungslinie rotierend geführte Strahlungsabgabeöffnung mit zugeordneter Strahlungsabgabeleitscheibe jeweils über verbindende Strahlungsleitkabel hintereinander durchstrahlt werden, und daß die von dem jeweiligen Probegefäß austretende Strahlung durch ein weiteres, verbindendes, zu einer Strahlungsaufnahmeleitscheibe führendes Strahlungsleitkabel aufgenommen und von dieser über eine korrespondierend zu der rotierenden Strahlungsabgabeöffnung geführte Strahlungsaufnahmeöffnung zum Empfänger geleitet, der jeweils aufgenommene Strahlungswert gemesseun und dieser fallweise registriert wird.

Durch die vorgeschlagene Lösung wurde in einfacher Weise
ein Verfahren zur Durchstrahlung und Messung des Strahlendurchganges durch die in Reihe angeordneten, in Gefäßen
eingebrachten Proben realisiert. Die korrespondierende
Führung der Strahlungsabgabe und der Strahlungsaufnahme
scheidet mögliche Fehlerquellen praktisch vollständig
aus, da eine zwangsläufige Synchronisation der Sende-
und Empfängerseite gegeben ist.
Die maximale Anzahl der in Reihe angeordneten, hintereinander zu durchstrahlenden Gefäße wird dabei lediglich
durch die korrespondierende Zahl der Öffnungen in der
feststehenden Strahlungsabgabeleitscheibe und in der
feststehenden Strahlungsaufnahmeleitscheibe begrenzt,
während die Geschwindigkeit des Untersuchungsablaufes
durch die Umfangs- bzw. Winkelgeschwindigkeit der entsprechend rotierenden Strahlungsabgabeöffnung und der
Strahlungsaufnahmeöffnung innerhalb der durch den Empfänger gegebenen technischen Grenzen bestimmt wird.

Desweiteren sieht das Verfahren vor, daß erst bei Erreichung des vollen Strahlungsdurchganges zwischen der
Strahlungsaufnahmeleitscheibe und der rotierenden
Strahlungsaufnahme der Empfänger aufnimmt.

Auf diese Weise wird immer nur der maximale Strahlungsdurchgang durch den Empfänger erfaßt.

Die zur Ausübung des Verfahrens erforderliche Vorrichtung
sieht vor, daß ein erster kurbelförmig ausgebildeter,
sich drehender Strahlungskanal in eine mit diesem verbundene, mit einer peripher angeordneten Strahlungsabgabeöffnung versehene Kurbelscheibe einmündet, und der Strahlungskanal und die Kurbelscheibe zusammen eine einheitliche Strahlungssendekurbel bilden,

daß dieser sich drehenden Strahlungssendekurbel koaxial eine feststehende Strahlungsabgabeleitscheibe über im Radialmaß der Strahlungsaustrittsöffnung aus der Strahlungssendekurbel peripher im Abstand verteilte Strahlungsabgabeöffnungen zugeordnet sind,

daß im Abstand zu dieser Kombination aus Strahlungssendekurbel und Strahlungsabgabeleitscheibe eine zweite gleichartige Kombination, bestehend aus einer feststehenden Strahlungsaufnahmeleitscheibe mit korrespondierend zu den in der Strahlungsabgabeleitscheibe gebildeten Strahlungsabgabeöffnungen ausgebildete Strahlungsaufnahmeöffnungen und einer mit einem ebenfalls kurbelförmig ausgebildeten Strahlungskanal versehen, synchron mit der Strahlungssendekurbel sich drehenden zweiten Kurbelscheibe mit Lichteintrittsöffnungen als Strahlungsaufnahmekurbel vorgesehen ist, und der Abgang von der Strahlungsaufnahmekurbel einem Empfänger zugeordnet ist,

daß zwischen den der Strahlungssendekurbel und der Strahlungsaufnahmekurbel als Leitscheibe zugeordneten Festscheiben in geordneten Einstellpositionen Probegefäße so eingebracht sind, daß diese über gegenüberliegende, gleichachsig angeordnete Anschlüsse über diesen angeschlossene Strahlungsleitkabel, die mit jeweils korrespondierenden Strahlungsabgabe- und Strahlungsaufnahmeöffnungen in den Leitscheiben verbunden sind, durchstrahlbar sind, und

daß jeweils das von der Strahlungsquelle über den Strahlungskanal, die Strahlungsabgabeleitscheibe und ein Strahlungsleitkabel durch das Probegefäß führbare Strahlung von dem an dieses anschließenden weiteren Strahlungsleitkabel aufnehmbar und über die Strahlungsaufnahmekurbel zu dem Empfänger leitbar ist.

Die Zusammenfassung des Strahlungskanals und einer die Strahlungsabgabeöffnung tragenden Kurbelscheibe zu einer einheitlichen Strahlungssendekurbel einerseits und die Zusammenfassung einer die Strahlungsaufnahmeöffnung tragenden Kurbelscheibe mit einem zweiten Strahlungskanal und einer Strahlungsaufnahmekurbel andererseits und deren synchroner Antrieb, der beispielsweise durch eine durchgehende Welle zwischen den beiden Kurbeln hergestellt werden kann, bilden einen wesentlichen Sicherheitsfaktor.

Da, wie vorgeschlagen, die Strahlungskabel an Anschlüsse der Einstellpositionen der Gefäße und der Strahlungsabgabe- und Strahlungsaufnahmeleitscheibe fest anordnungsbar sind, kann auch hier jede Verwechselung ausgeschlossen werden.

In aller Regel ist vorgesehen, daß die Strahlungsquelle eine Lichtquelle ist, die Strahlungsleitkabel lichtführende Fiberkabel und die Strahlungskanäle lichtführende Fiberformstücke sind.

Selbstverständlich können auch adäquate Eigenschaften ausweisende Materialien verwendet werden.

0062160

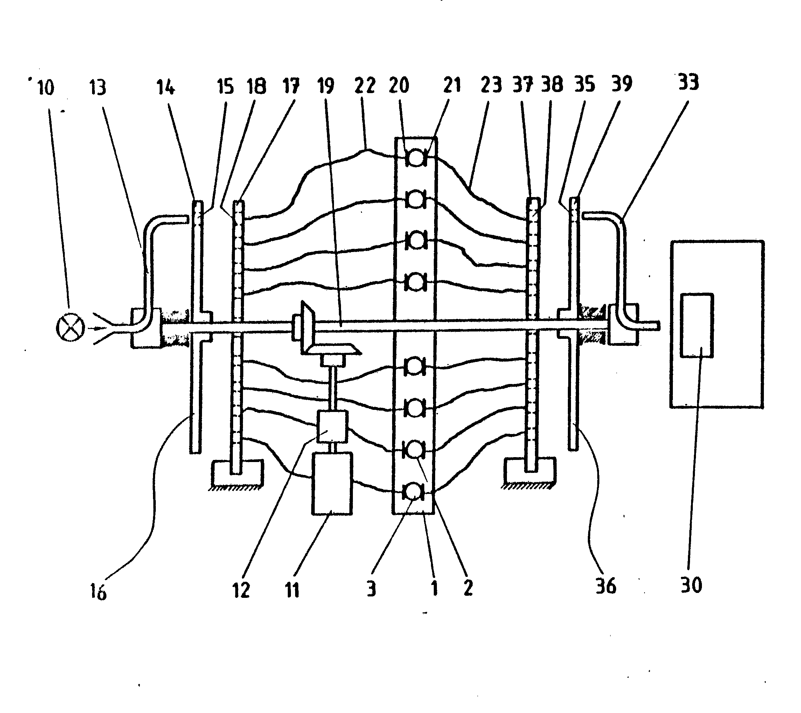

Die Erfindung wird durch die beigefügte Zeichnung näher erläutert.

Das Kriterium dieser durch die schematische Darstellung ausgewiesenen Einrichtung ist, die Verwendung von nur einer stationären Strahlungsquelle 10 als Sender und nur eines stationären Empfängers 30 für die nacheinander zu erfolgende Durchstrahlung des Inhalts der vorzugsweise in Reihen, d.h. in Racks 1 oder Ketten oder dergleichen in Einstellpositionen 2 angeordneten, gleichen Abstand zueinander aufweisenden Probegefäße 3.

Es ist nun vorgesehen, in Strahlrichtung der Strahlungsquelle 10 einen kurbelförmig, d.h. als Strahlungssendekurbel 16 ausgebildeten Strahlungskanal 13 über einen mit Drehzahlvariator 12 ausgerüsteten Motor kontinuierlich oder schrittweise über die gleichachsig mit dem Lichtkanal 13 verbundenen Welle 19 anzutreiben, wobei der kontinuierliche Antrieb als vorrangig zu bezeichnen ist.

Der Strahlungskanal 13 bildet zusammen mit einer gleichachsig angetriebenen, kreisrunden Kurbelscheibe 14 eine als Strahlungssendekurbel 16 bezeichnete, gemeinsam sich drehende Einheit, wobei die Kurbelscheibe 14 mit einer Strahlungsaustrittsöffnung 15 versehen ist.

Der Strahlungssendekurbel 16 ist in Strahlrichtung eine gleichachsig zu dieser, aber feststehend angeordnete, Strahlungsabgabeleitscheibe 17 zugeordnet, wobei deren Strahlungsabgabeöffnungen 18 den gleichen radialen Abstand von der Scheibemitte wie die Strahlungsaustrittsöffnungen 15 der Strahlungssendekurbel 16 aufweisen. Es ist vorgesehen, eine Vielzahl dieser Strahlungsab-

8          0062160

gabeöffnungen 18 in der Strahlungsabgabeleitscheibe 17 in gleichem Abstand zueinander auf der so gekennzeichneten Kreisbahn anzuordnen.

Zu einem, die Einbringung und Handhabung der Racks 1 ermöglichenden Abstandes ist, und zwar gleichachsig zu der ersten Kombination 10 bis 18, von der durchgehenden Welle 19 angetrieben, eine gleichartige, jedoch einem Empfänger 30 zugeordnete zweite Kombination 30 bis 38 angeordnet.

Diese Kombination 30 bis 38 besteht also aus dem bereits erwähnten Empfänger 30 und - entgegen der Richtung der zu empfangenden Strahlung weisend - aus einem Strahlungskanal 33 und einer sich drechenden Kurbelscheibe 34 mit Strahlungseintrittsöffnungen 35 gebildeten Strahlungsaufnahmekurbel 36 sowie einer vorgeordneten, feststehenden, mit Strahlungsaufnahmeöffnungen 38 versehenen Strahlungsaufnahmeleitscheibe 37. Die Strahlungsabgabeöffnungen 18 der Strahlungsabgabeleitscheibe 17 und die Strahlungsaufnahmeöffnungen 38 der Strahlungsaufnahmeleitscheibe 37 sind feststehend angeordnet und korrespondierend zueinander ausgerichtet.

Ebenfalls korrespondierend fixiert ist die Lage der Strahlungsaustrittsöffnung 15, der Strahlungssendekurbel 16 zu der Strahlungseintrittsöffnung 35 der Strahlungsaufnahmekurbel 36, wobei die beiden Kurbeln, wie erwähnt, synchron durch die Welle 19 angetrieben werden.

Zwischen der feststehenden Strahlungsabgabeleitscheibe 17 und der ebenfalls feststehenden Strahlungsaufnahmeleitscheibe 37 ist - im Falle dieser beispielsweisen Ausführung - das die Probegefäße 3 tragende Rack 1 zur Richtung der der Strahlungssendekurbel 16 und die Strahlungsaufnahmekurbel 36 verbindenden Welle 19 senkrecht fixiert.

Im Bereich jeder Einstellposition 2 der Probegefäße 3 sind im Abstand der Gefäße gegenüberliegend Anschlüsse 20, 21 für den Anschluß von Strahlungsleitkabel 22, 23 vorgesehen, wobei das Strahlungsleitkabel 22 zu einer Strahlungslichtabgabeöffnung 18 der Strahlungsabgabeleitscheibe 17 und das Strahlungsleitkabel 23 zu einer Strahlungsaufnahmeöffnung 38 der Strahlungsaufnahmeleitscheibe 37 führt.

Die Anzahl der anzuordnenden Strahlungsleitkabel 22, 23 wird durch die Anzahl der Strahlungsabgabeöffnungen 18 der Strahlungsabgabeleitscheibe 17 in Verbindung mit der Anzahl der zu untersuchenden Probegefäße 3 bestimmt.

Bei sich drehender Welle fließt die von der Strahlungsquelle 10 gesendete Strahlung bei Deckung der Strahlungsaustrittsöffnung 15 der Strahlungssendekurbel 16 mit einer Strahlungsabgabeöffnung 18 der Strahlungsabgabeleitscheibe 17 über ein Strahlungsleitkabel 22 durch ein Probegefäß 3 und wird durch das gegenüberliegende Strahlungsleitkabel 23 aufgenommen und über dieses zur Strahlungsaufnahmeöffnung 38 der Strahlungsaufnahmeleitscheibe 37 geleitet und von hier über die Strahlungseintrittsöffnung 55 der Strahlungsaufnahmekurbel 36 zum Empfänger 30 geführt.

Der Empfänger 30 gibt jeweils bei Einstellung des vollen Strahlungsdurchgangsquerschnitts von der Sende- zur Empfängerseite Impuls zur Aufnahme des Strahlungswertes, zu dessen weiterer rechnerischer Bearbeitung und zu dessen anschließender Registrierung.

Patentansprüche

1. Verfahren zur Durchstrahlung von in Probegefäßen einlagernden Flüssigkeiten mittels eines gerichteten Senders und eines korrespondierenden Empfängers, wobei der Sender eine Lichtquelle und der Empfänger eine Fotozelle sein kann, insbesondere zur Durchlichtung von Patientenseren, dadurch gekennzeichnet,

d a ß senkrecht zu der Verbindungslinie (x) zwischen der als Sender wirksamen Strahlungsquelle (10) und dem Strahlungsempfänger (30) eine Gruppe von in Reihe und während der Durchstrahlung der genannten Gruppe stationär in ihren Einstellpositionen (2) verbleibender Probegefäße (3) angeordnet sind,

d a ß diese Probegefäße (3) durch eine achsparallel um die Verbindungslinie (x) rotierend geführte Strahlungsabgabeöffnung (15) mit zugeordneter Strahlungsabgabeleitscheibe (17) jeweils über verbindende Strahlungsleitkabel (22) hintereinander durchstrahlt werden, und

d a ß die von dem jeweiligen Probegefäß (2) austretende Strahlung durch ein weiteres, verbindendes, zu einer Strahlungsaufnahmeleitscheibe (37) führendes Strahlungsleitkabel (23) aufgenommen und von dieser über ein korrespondierend zu der rotierenden Strahlungsabgabeöffnung (15) geführte Strahlungsaufnahmeöffnung (35) zum Empfänger (30) geleitet, der jeweils aufgenommene Strahlungswert gemessen und dieser fallweise registriert wird.

2. Verfahren nach Anspruch 1, dadurch gekennzeichnet,

d a ß  erst bei Erreichung des vollen Strahlungsdurchganges zwischen der Strahlungsaufnahmeleitscheibe (37) und der rotierenden Strahlungsaufnahme (35) der Empfänger (30) aufnimmt.

3. Vorrichtung zur Durchführung des Verfahrens nach Anspruch 1, dadurch gekennzeichnet,

d a ß  ein erster kurbelförmig ausgebildeter, sich drehender Strahlungskanal (13) in eine mit diesem verbundene, mit einer peripher angeordneten Strahlungsabgabeöffnung (15) versehene Kurbelscheibe (14) einmündet, und der Strahlungskanal (13) und die Kurbelscheibe (14) zusammen eine einheitliche Strahlungssendekurbel (16) bilden,

d a ß  dieser sich drehenden Strahlungssendekurbel (16) koaxial eine feststehende Strahlungsabgabeleitscheibe (17) über im Radialmaß der Strahlungsaustrittsöffnung (15) aus der Strahlungssendekurbel (16) peripher im Abstand verteilte Strahlungsabgabeöffnungen (18) zugeordnet sind,

d a ß  im Abstand zu dieser Kombination (10 bis 18) aus Strahlungssendekurbel (16) und Strahlungsabgabeleitscheibe (17) eine zweite gleichartige Kombination (30 bis 38), bestehend aus einer feststehenden Strahlungsaufnahmeleitscheibe (37) mit korrespondierend zu den in der Strahlungsabgabeleitscheibe (17) gebildeten Strahlungsabgabeöffnungen (18) ausgebildete Strahlungsaufnahmeöffnungen (38) und einer mit einem ebenfalls kurbelförmig ausgebildeten Strahlungskanal (33) versehenen, synchron mit der Strahlungssendekurbel (16) sich drehende zweite Kurbelscheibe (34) mit Lichteintrittsöffnungen (35) als Strahlungsaufnahmekurbel (36) vorgesehen ist, und der Abgang von der Strahlungsaufnahmekurbel (36) einem Empfänger (30) zugeordnet ist,

d a ß  zwischen den der Strahlungssendekurbel (16) und der Strahlungsaufnahmekurbel (36) als Leitscheiben (17 und 37) zugeordneten Festscheiben in geordneten Einstellpositionen (2) Probegefäße (3) so eingebracht sind, daß diese über gegenüberliegende, gleichachsig angeordnete Anschlüsse (20/21) über diesen angeschlossene Strahlungsleitkabel (22/23), die mit jeweils korrespondierenden Strahlungsabgabe- (18) und Strahlungsaufnahmeöffnungen (38) in den Leitscheiben (17/37) verbunden sind, durchstrahlbar sind, und

d a ß  jeweils die von der Strahlungsquelle (10) über den Strahlungskanal (13), die Strahlungssendekurbel (16), die Strahlungsabgabeleitscheibe (17) und ein Strahlungsleitkabel (22) durch das Probegefäß (3) führbare Strahlung von dem an dieses anschließenden weiteren Strahlungsleitkabel (23) aufnehmbar und über die Strahlungsaufnahmekurbel (36) zu dem Empfänger (30) leitbar ist.

4. Vorrichtung nach Anspruch 3, dadurch gekennzeichnet, d a ß  die Strahlungsquelle (10) eine Lichtquelle ist, die Strahlungsleitkabel (22/23) lichtführende Fiberkabel sind und die Strahlungskanäle (13/33) lichtführende Fiberformstücke sind.

0062160

5. Vorrichtung nach Anspruch 4, dadurch gekennzeichnet,

d a ß die Strahlungsleitkabel (22/23) und die Strahlungskanäle (13/33) durch andere adäquate Eigenschaften ausweisende Materialien gebildet sind.

10  13  14  15 18 17 19 22 20  21 23 37 38 35 39  33

16  12  11  3  1 2  36  30

0062160

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| X | US-A-3 697 185 (A. KASSEL et al.) <br> * Spalten 2,19,20; Figur 7 * | 1-5 | G 01 N 21/25 |
| | --- | | |
| A | US-A-3 393 800 (F. DURAND) <br> * Spalten 2-4; Figur 1 * | 1-5 | |
| | --- | | |
| A | DE-A-2 455 720 (COMPUR WERK) <br> * Seiten 8,9; Figur 2 * | 1 | |
| | ----- | | |

|  | RECHERCHIERTE SACHGEBIETE (Int. Cl. 3) |
|---|---|
|  | G 01 N 21/25 |

Der vorliegende Recherchenbericht wurde für alle Patentansprüche erstellt.

| Recherchenort <br> DEN HAAG | Abschlußdatum der Recherche <br> 20-07-1982 | Prüfer <br> BOEHM CH.E.D. |
|---|---|---|

KATEGORIE DER GENANNTEN DOKUMENTEN

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03.82